# EUROPÄISCHE PATENTSCHRIFT

(11) **EP 2 291 281 B1**
(45) Veröffentlichungstag und Bekanntmachung des Hinweises auf die Patenterteilung: **27.06.2012**
(21) Anmeldenummer: 09772148.4
(22) Anmeldetag: 30.06.2009
(51) Int. Cl.: B29C 67/00

(54) **VORRICHTUNG ZUM SCHICHTWEISEN HERSTELLEN EINES DREIDIMENSIONALEN OBJEKTS**
DEVICE FOR LAYER-WISE PRODUCING A THREE-DIMENSIONAL OBJECT
APPAREIL DE PRODUCTION D'UN OBJET TRIDIMENSIONNEL PAR ADDITION DE COUCHES SUCCESSIVES

(30) Priorität: 03.07.2008 DE 102008031587
(43) Veröffentlichungstag der Anmeldung: 09.03.2011
(73) Patentinhaber: EOS GmbH Electro Optical Systems, 82152 Krailling (DE)
(72) Erfinder: LEUTERER, Martin, 82140 Olching (DE)
(74) Vertreter: Klein, Peter
(86) Internationale Anmeldenummer: PCT/EP2009/004725
(87) Internationale Veröffentlichungsnummer: WO 2010/000448

(56) Entgegenhaltungen:
- WO-A1-2006/125507
- WO-A1-2007/003244
- DE-U1- 29 624 498

## Beschreibung

Die vorliegende Erfindung bezieht sich auf eine Vorrichtung zum schichtweisen Herstellen eines dreidimensionalen Objekts, insbesondere auf eine Vorrichtung zum Herstellen eines dreidimensionalen Objektes durch schichtweises Verfestigen von Aufbaumaterial an den dem Querschnitt des herzustellenden Objektes in der jeweiligen Schicht entsprechenden Stellen durch Energieeinbringung.

Ein unter dem Namen "Selektives Lasersintern" bekanntes Verfahren zum Herstellen eines dreidimensionalen Objektes durch aufeinanderfolgendes Verfestigen von Schichten eines pulverförmigen, mittels elektromagnetischer Strahlung verfestigbaren Aufbaumaterials an den dem jeweiligen Querschnitt des Objektes entsprechenden Stellen sowie eine Vorrichtung zur Durchführung dieses Verfahrens ist aus der DE 43 00 478 C1 bekannt. Bei der bekannten Vorrichtung wird das zu bildende Objekt auf einer metallischen Plattform aufgebaut, die Teil der Vorrichtung ist.

In der DE 296 24 498 U1 wird vorgeschlagen, auf die Plattform eine vorgefertigte Platte, die mit dem darauf befindlichen fertigen Objekt herausnehmbar ist. Die Plattform enthält einen Kühlkanal zur Aufnahme eines Kühlwasser führenden Kupferrohres.

Andere Druckschriften sehen unter anderem auch eine Heizung des Bauraums oder der Plattform vor. So zeigt beispielsweise die DE 101 08 612 C1 eine Vorrichtung zum selektiven Lasersintern, bei der der Bauraum von einer Mantelheizung umschlossen ist. Zusätzlich kann auch eine Bodenheizung vorgesehen sein. ,

WO 2006/125507 A1 beschreibt eine Strahlungsheizung zum Heizen des Aufbaumaterials in einer Lasersintervorrichtung und eine Lasersintervorrichtung mit einer solchen Strahlungsheizung. Die Strahlungsheizung besitzt ein flächiges Wärmeabstrahlelement, das dadurch gekennzeichnet ist, dass es aus einem Material mit einer geringen thermischen Trägheit mit einer Temperaturleitzahl von vorzugsweise mehr als 1,5 * 10^{-4.}m²/s besteht und vorzugsweise eine Dicke von 2 mm oder weniger aufweist. In einer Ausführungsform weist die Strahlenheizung ein Widerstandselement als Wärmeabstrahlelement auf, das aus einer Graphitplatte, z.B. einer kohlefaserverstärkten Graphitplatte, gebildet ist.

WO 2006/125507 A1 offenbart eine vorrichtung gemäss dem Oberbegriff des Anspruchs 1

Ein Problem, das beim Heizen oder Kühlen der Plattform, auf der das dreidimensionale Objekt aufgebaut wird, oder eines Behälters, der das Aufbaumaterial seitlich begrenzt, auftritt, ist die mangelnde Gleichmäßigkeit der Temperaturverteilung auf der Oberfläche der Plattform. So kann es beispielsweise bei der Wärmeeinbringung zu lokalen Temperaturspitzen kommen, die sich negativ auf die Qualität der Pulverschicht und auf das Prozessverhalten (z.B. Aufschmelzen, Versintern, Curl und Verzug) auswirken.

Der vorliegenden Erfindung liegt somit die Aufgabe zugrunde, eine Vorrichtung zum schichtweisen Herstellen eines dreidimensionalen Objekts bereitzustellen, bei der die Qualität der Pulverschicht und das Prozessverhalten verbessert sind.

Die Aufgabe wird gelöst durch eine Vorrichtung gemäß Anspruch 1. Weiterbildungen der Erfindung sind in den Unteransprüchen angegeben.

Durch die Schicht mit stark anisotroper Wärmeleitfähigkeit wird die Temperaturverteilung an der Oberseite des Trägers geglättet, so dass Temperaturspitzen vermieden werden. Dadurch werden die Qualität der Pulverschicht und das Prozessverhalten der Vorrichtung verbessert. Durch geeignete Auswahl des verwendeten Materials und der Dicke der Shicht mit stark anisotroper Wärmeleitfähigkeit kann die Stärke des Effektes gezielt beeinflusst werden.

Weitere Merkmale und Zweckmäßigkeiten der Erfindung ergeben sich aus der Beschreibung eines Ausführungsbeispiels anhand der beigefügten Figuren.
- Fig. 1: ist eine schematische Schnittansicht einer Vorrichtung zum schichtweisen Herstellen eines dreidimensionalen Objekts.
- Fig. 2: ist eine schematische Schnittansicht eines in der Vorrichtung von Fig. 1 enthaltenen Trägers gemäß einer ersten Ausführungsform der Erfindung.

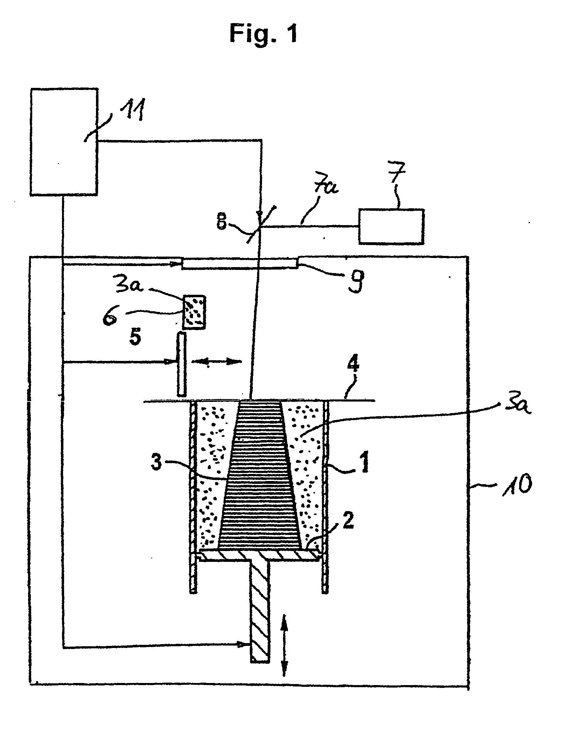

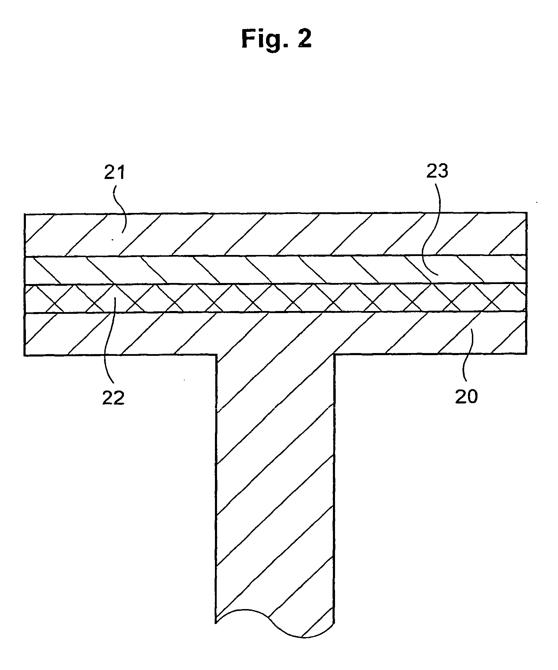

Im folgenden wird mit Bezug auf Fig. 1 und 2 eine Vorrichtung zum Herstellen eines dreidimensionalen Objektes gemäß einer ersten Ausführungsform der vorliegenden Erfindung beschrieben.

Die in Fig. 1 dargestellte Lasersintervorrichtung weist einen nach oben hin offenen Behälter 1 mit einem darin in vertikaler Richtung bewegbaren Träger 2 auf, der das zu bildende Objekt 3 trägt und ein Baufeld definiert. Der Träger 2 wird in vertikaler Richtung so eingestellt, dass die jeweils zu verfestigende Schicht des Objekts in einer Arbeitsebene liegt, die durch die Oberfläche eines Arbeitstischs 4 gebildet ist, der im Bereich des Behälters 1 eine Öffnung aufweist. Weiterhin ist ein Beschichter 5 zum Aufbringen des durch elektromagnetische Strahlung verfestigbaren pulverförmigen Aufbaumaterials 3a vorgesehen. Dem Beschichter 5 wird das Aufbaumaterial 3a aus einem Vorratsbehälter 6 zugeführt. Die Vorrichtung weist ferner einen Laser 7 auf, der einen Laserstrahl 7a erzeugt, der durch eine Ablenkeinrichtung 8 auf ein Einkoppelfenster 9 gelenkt und von diesem in die Prozesskammer 10 hindurch gelassen und in einem vorbestimmten Punkt in der Arbeitsebene 4 fokussiert wird.

Es ist ferner eine Steuereinheit 11 vorgesehen, über die die Bestandteile der Vorrichtung in koordinierter Weise zum Durchführen des Bauprozesses gesteuert werden.

Wie am besten aus Fig. 2 ersichtlich, enthält der Träger 2 eine Trägerplatte 20, vorzugsweise aus Metall, und eine Deckplatte 21, ebenfalls vorzugsweise aus Metall. Zwischen der Trägerplatte 20 und der Deckplatte 21 ist ein Heizelement 22 angeordnet. Zwischen dem Heizelement 22 und der Deckplatte 21 befindet sich eine Schicht mit stark anisotroper Warmeleitfähigkeit 23, beispielsweise eine Folie oder Platte, aus einem Material mit stark anisotroper Wärmeleitfähigkeit.

Das Material mit stark anisotroper Wärmeleitfähigkeit ist dabei so angeordnet, dass die Wärmeleitfähigkeit in einer Richtung parallel zu der Oberfläche des Trägers 2 (in Schichtrichtung) wesentlich größer ist als in einer Richtung senkrecht zu der Oberfläche des Trägers 2 (senkrecht zu der Schichtrichtung). Die Schicht mit stark anisotroper Warmeleitfähigkeit 23 kann beispielsweise eine Graphitfolie oder eine Graphitplatte mit mehrschichtigem Folienaufbau, z.B. eine Graphitlaminatplatte sein.

Vorzugsweise ist die Wärmeleitfähigkeit des Materials bei Raumtemperatur in der Schichtrichtung mindestens 5-mal so groß wie senkrecht zu der Schichtrichtung, in weiter bevorzugter Weise mindestens 10-mal so groß, in noch weiter bevorzugter Weise mindestens 20-mal so groß.

Bei dem Betrieb der Vorrichtung wird in einem ersten Schritt der Träger 2 soweit verfahren, bis seine Oberseite um eine Schichtdicke unterhalb der Arbeitsebene 4 liegt. Dann wird mittels des Beschichters 5 eine erste Schicht des Materials 3a auf den Träger 2 aufgebracht und geglättet. Daraufhin steuert die Steuereinheit 11 die Ablenkeinrichtung 8 derart, dass der abgelenkte Laserstrahl 7a selektiv an den Stellen der Schicht des Materiales 3a auftrifft, die verfestigt werden sollen. Dadurch wird an diesen Stellen das Material verfestigt bzw. gesintert.

In einem nächsten Schritt wird der Träger 2 um die Dicke der nächsten Schicht abgesenkt und erneut mittels des Beschichters 5 eine zweite Materialschicht aufgetragen und geglättet und mittels des Laserstahls 7a selektiv verfestigt. Die Schritte Materialschicht aufbringen, Glätten und Verfestigen werden nun so oft durchgeführt, bis das herzustellende Objekt 3 vervollständigt ist.

Die durch die Schicht mit stark anisotroper Wärmeleitfähigkeit bewirkte Glättung der Temperaturverteilung an der Oberseite des Trägers ist besonders vorteilhaft bei der Verwendung von Kunststoffen als Aufbaumaterial. Durch die erfindungsgemäße Schicht mit stark anisotroper Wärmeleitfähigkeit werden lokale Temperaturerhöhungen, die ggf. ein Aufschmelzen des Aufbaumaterials verursachen, vermieden.

Die Schicht mit stark anisotroper Wärmeleitfähigkeit kann aber auch bei Verwendung eines Metallpulvers verwendet werden. Allgemein ist die Erfindung einsetzbar beim Herstellen eines dreidimensionalen Objektes durch schichtweise Verfestigen eines Aufbaumaterials, wenn eine gleichmäßige Temperaturverteilung von Vorteil ist.

In einer zweiten Ausführungsform ist anstelle des Trägers die Wand des Behälters 1 mit einem Heizelement versehen, um dem Aufbaumaterial von der Seite her Wärme zuzuführen.

Auch in dieser Ausführungsform ist eine Schicht mit stark anisotroper Wärmeleitfähigkeit so an oder in der Behälterwand angeordnet, dass die Wärmeleitfähigkeit in der Schichtrichtung (also parallel zu der Oberfläche der Behälterwand) wesentlich größer ist als in der Richtung senkrecht zu der Schichtrichtung (also senkrecht zu der Oberfläche der Behälterwand).

Anders als in der ersten Ausführungsform befindet sich die Schicht mit stark anisotroper Wärmeleitfähigkeit jedoch nicht zwischen dem Heizelement und dem Aufbaumaterial, sondern auf der dem Aufbaumaterial gegenüberliegenden Seite des Heizelements. Da zur Beheizung der Behälterwand in der Regel diskret angeordnete Heizelemente verwendet werden, kann auch so ein guter Temperaturausgleich in der Fläche zwischen den Heizelementen erzielt werden. Andererseits bietet die Anordnung der Schicht mit stark anisotroper Wärmeleitfähigkeit auf der dem Aufbaumaterial gegenüberliegenden Seite des Heizelements den Vorteil einer verbesserten Isolation nach außen.

Die Merkmale dieser Ausführungsform können mit denen der ersten Ausführungsform kombiniert oder gegen sie ausgetauscht werden. So können beispielsweise sowohl der Träger 2 als auch die Wand des Behälters 1 jeweils mit einem Heizelement und einer Schicht mit stark anisotroper Wärmeleitfähigkeit versehen sein. An dem Träger 2 und an der Wand des Behälters 1 kann die Schicht mit stark anisotroper Wärmeleitfähigkeit jeweils zwischen dem Heizelement und dem Aufbaumaterial oder auf der dem Aufbaumaterial gegenüberliegenden Seite des Heizelements angeordnet sein.

Die Erfindung ist nicht auf die beschriebenen Ausführungsformen eingeschränkt. Anstelle des Heizelements kann beispielsweise auch ein Kühlelement vorgesehen sein.

Heiz- bzw. Kühlelement und die Schicht mit stark anisotroper Wärmeleitfähigkeit können an beliebiger Stelle des Trägers oder der Behälterwand angebracht sein.

Die Schicht mit stark anisotroper Wärmeleitfähigkeit kann fest oder lösbar an dem Träger oder der Behälterwand befestigt sein, oder der Träger oder die Behälterwand können selber aus einem Material mit stark anisotroper Wärmeleitfähigkeit gebildet sein.

Die Schicht mit stark anisotroper Wärmeleitfähigkeit kann über den gesamten Querschnitt des Trägers oder auch nur selektiv an bestimmten Stellen des Trägers angeordnet sein, beispielsweise zwischen einem Heizelement und dem Randbereich des Trägers. Dadurch kann die Wärmezufuhr in diese sonst unterversorgte Zone verbessert werden.

Die Shicht mit stark anisotroper Wärmeleitfähigkeit kann auch Bestandteil einer lösbar befestigten vorgefertigten Platte sein, die auf den Träger aufgelegt ist und auf der das Objekt aufgebaut werden soll.

Auch an der Behälterwand kann Schicht mit stark anisotroper Wärmeleitfähigkeit über die gesamte Wandfläche oder nur selektiv an bestimmten Stellen der Behälterwand angeordnet sein.

Der Ort der Anbringung des Heiz- bzw. Kühlelements und der Schicht mit stark anisotroper Wärmeleitfähigkeit ist nicht auf die in den obigen Ausführungsformen beschriebenen Beispiele eingeschränkt. So kann beispielsweise auch der Arbeitstisch 4 über seine gesamte Fläche oder einen Teil davon mit ihnen versehen sein.

In all diesen Fällen ist das Material mit stark anisotroper Wärmeleitfähigkeit jeweils so gewählt und angeordnet, wie oben bei den Ausführungsformen beschrieben, dass die Wärmeleitfähigkeit in der Schichtrichtung (also parallel zu der Oberfläche des Trägers bzw. der Behälterwand) wesentlich größer ist als in der Richtung senkrecht zu der Schichtrichtung (also senkrecht zu der Oberfläche des Trägers bzw. der Behälterwand).

## Patentansprüche

1. Vorrichtung zum Herstellen eines dreidimensionalen Objektes (3) durch schichtweises Aufbringen und Verfestigen eines pulverförmigen Aufbaumaterials (3a) an den dem Querschnitt des herzustellenden Objektes (3) in der jeweiligen Schicht entsprechenden Stellen durch Einwirkung eines Lasers (7) oder einer anderen Energiequelle, mit
einem Träger (2), auf dem zum Aufbau des Objekts (3) Schichten des pulverförmigen Aufbaumaterials (3a) aufbringbar sind,
einem Behälter (1), der das Aufbaumaterial (3a) seitlich begrenzt, und
einem Heiz- oder Kühlelement (22), das dem schichtweise aufgebrachten Aufbaumaterial (3a) Wärme zuführt oder entzieht,
**dadurch gekennzeichnet, dass**
eine Schicht (23) mit stark anisotroper Wärmeleitfähigkeit an dem Träger (2) und/oder der Wand des Behälters (1) bereitgestellt ist, wobei die Wärmeleitfähigkeit der Schicht (23) mit stark anisotroper Wärmeleitfähigkeit in der Schichtrichtung bei Raumtemperatur mindestens 5-mal so groß ist wie senkrecht zu der Schichtrichtung, vorzugsweise mindestens 10-mal so groß, in weiter bevorzugter Weise mindestens 20-mal so groß.

2. Vorrichtung nach Anspruch 1, bei der die Schicht (23) mit stark anisotroper Wärmeleitfähigkeit zwischen dem Heiz- oder Kühlelement (22) und dem Aufbaumaterial (3a) angeordnet ist.

3. Vorrichtung nach Anspruch 1, bei der die Schicht mit stark anisotroper Wärmeleitfähigkeit auf der dem Aufbaumaterial (3a) gegenüberliegenden Seite des Heiz- oder Kühlelements (22) angeordnet ist.

4. Vorrichtung nach einem der Ansprüche 1 bis 3, bei der das Heiz- oder Kühlelement (22) und die Schicht (23) mit stark anisotroper Wärmeleitfähigkeit an dem Träger (2) angeordnet sind.

5. Vorrichtung nach einem der Ansprüche 1 bis 4, bei der das Heiz- oder Kühlelement und die Schicht mit stark anisotroper Wärmeleitfähigkeit an der Wand des Behälters (1) angeordnet sind.

6. Vorrichtung nach einem der Ansprüche 1 bis 5, bei der das Heiz- oder Kühlelement und die Schicht mit stark anisotroper Wärmeleitfähigkeit an einem Arbeitstisch (4) angeordnet sind, der eine Arbeitsebene zum Aufbringen und Verfestigen des Aufbaumaterials (3a) bildet.

7. Vorrichtung nach einem der Ansprüche 1 bis 6, bei der die Schicht (23) mit stark anisotroper Wärmeleitfähigkeit eine Folie oder Platte aus einem Material mit stark anisotroper Wärmeleitfähigkeit ist.

8. Vorrichtung nach einem der Ansprüche 1 bis 7, bei der die Schicht (23) mit stark anisotroper Wärmeleitfähigkeit eine Graphitfolie oder eine Graphitplatte mit mehrschichtigem Folienaufbau ist.

9. Vorrichtung nach einem der Ansprüche 1 bis 8, bei der die Schicht (23) mit stark anisotroper Wärmeleitfähigkeit sich über den gesamten Querschnitt des Trägers (2) oder die gesamte Wandfläche des Behälters (1) oder die gesamte Fläche des Arbeitstisches (4) erstreckt.

10. Vorrichtung nach einem der Ansprüche 1 bis 8, bei der die Schicht (23) mit stark anisotroper Wärmeleitfähigkeit sich lediglich über einen Teil des Querschnitts des Trägers (2) oder der Wandfläche des Behälters (1) oder der Fläche des Arbeitstisches (4) erstreckt.

11. Vorrichtung nach einem der Ansprüche 1 bis 10, bei der die Schicht (23) mit stark anisotroper Wärmeleitfähigkeit Bestandteil des Trägers (2) oder der Wand des Behälters (1) oder des Arbeitstisches (4) ist.

12. Vorrichtung nach einem der Ansprüche 1 bis 11, bei der die Schicht (23) mit stark anisotroper Wärmeleitfähigkeit Bestandteil einer Platte ist, die auf den Träger (2) aufgelegt ist und auf der das Objekt (3) aufgebaut werden soll.

## Claims

1. Device for producing a three-dimensional object (3) by applying and solidifying a powdery build-up material (3a) layer by layer at the positions corresponding to the cross section of the object (3) to be produced in the respective layer by exposure to a laser (7) or another energy source, the device comprising
a support (2), to which layers of the powdery build-up material (3a) can be applied for building up the object (3),
a container (1), which laterally delimits the build-up material (3a), and
a heating or cooling element (22), which supplies heat to or removes heat from the build-up material (3a) applied layer by layer,
**characterized in that**
a layer (23) having a highly anisotropic thermal conductivity is provided on the support (2) and/or the wall of the container (1), wherein the thermal conductivity of the layer (23) having a highly anisotropic thermal conductivity is at least 5 times as high in the direction of the layer as that in the direction perpendicular to the layer at room temperature, preferably at least 10 times as high, further preferably at least 20 times as high.

2. Device according to Claim 1, wherein the layer (23) having a highly anisotropic thermal conductivity is arranged between the heating or cooling element (22) and the build-up material (3a).

3. Device according to Claim 1, wherein the layer having a highly anisotropic thermal conductivity is arranged on the side of the heating or cooling element (22) facing away from the build-up material (3a).

4. Device according to one of Claims 1 to 3, wherein the heating or cooling element (22) and the layer (23) having a highly anisotropic thermal conductivity are arranged on the support (2).

5. Device according to one of Claims 1 to 4, wherein the heating or cooling element and the layer having a highly anisotropic thermal conductivity are arranged on the wall of the container (1).

6. Device according to one of Claims 1 to 5, wherein the heating or cooling element and the layer having a highly anisotropic thermal conductivity are arranged on a working table (4), which forms a working plane for applying and solidifying the build-up material (3a).

7. Device according to one of Claims 1 to 6, wherein the layer (23) having a highly anisotropic thermal conductivity is a foil or plate made of a material having a highly anisotropic thermal conductivity.

8. Device according to one of Claims 1 to 7, wherein the layer (23) having a highly anisotropic thermal conductivity is a graphite foil or a graphite plate having a multi-layer foil structure.

9. Device according to one of Claims 1 to 8, wherein the layer (23) having a highly anisotropic thermal conductivity extends over the entire cross section of the support (2) or the entire wall surface of the container (1) or the entire surface of the working table (4).

10. Device according to one of Claims 1 to 8, wherein the layer (23) having a highly anisotropic thermal conductivity extends only over part of the cross section of the support (2) or of the wall surface of the container (1) or of the surface of the working table (4).

11. Device according to one of Claims 1 to 10, wherein the layer (23) having a highly anisotropic thermal conductivity is a component part of the support (2) or of the wall of the container (1) or of the working table (4).

12. Device according to one of Claims 1 to 11, wherein the layer (23) having a highly anisotropic thermal conductivity is a component part of a plate which is laid upon the support (2) and on which the object (3) is to be built up.

## Revendications

1. Dispositif de fabrication d'un objet tridimensionnel (3) par application et solidification couche par couche d'un matériau de construction (3a) en forme de poudre en des emplacements qui correspondent dans chaque couche à la section transversale de l'objet (3) à fabriquer, par action d'un laser (7) ou d'une autre source d'énergie, le dispositif présentant :
un support (2) sur lequel des couches du matériau de construction (3a) en forme de poudre peuvent être appliquées pour construire l'objet (3),
un récipient (1) qui délimite latéralement le matériau de construction (3a) et
un élément de chauffage ou de refroidissement (22) qui apporte ou enlève de la chaleur au matériau de construction (3a) appliqué par couches,
**caractérisé en ce que**
une couche (23) qui présente une conductivité thermique fortement anisotrope est prévue sur le support (2) et/ou sur la paroi du récipient (1),
**en ce qu'**à température ambiante, la conductivité thermique de la couche (23) à conductivité thermique fortement anisotrope est au moins 5 fois plus grande, de préférence au moins 10 fois plus grande et de façon encore plus préférable d'au moins 20 fois plus grande dans la direction de la couche que perperdiculairement à la direction de la couche.

2. Dispositif selon la revendication 1, dans lequel la couche (23) à conductivité thermique fortement anisotrope est disposée entre l'élément de chauffage ou de refroidissement (22) et le matériau de construction (3a).

3. Dispositif selon la revendication 1, dans lequel la couche à conductivité thermique fortement anisotrope est disposée sur le coté de l'élément de chauffage ou de refroidissement (22) situé face au matériau de construction (3a).

4. Dispositif selon l'une des revendications 1 à 3, dans lequel l'élément de chauffage ou de refroidissement (22) et la couche (23) à conductivité thermique fortement anisotrope sont disposés sur le support (2).

5. Dispositif selon l'une des revendications 1 à 4, dans lequel l'élément de chauffage ou de refroidissement et la couche à conductivité thermique fortement anisotrope sont disposés sur la paroi du récipient (1).

6. Dispositif selon l'une des revendications 1 à 5, dans lequel l'élément de chauffage ou de refroidissement et la couche à conductivité thermique fortement anisotrope sont disposés sur une table de travail (4) qui forme un plan de travail destiné à l'application et à la solidification du matériau de construction (3a).

7. Dispositif selon l'une des revendications 1 à 6, dans lequel la couche (23) à conductivité thermique fortement anisotrope est une feuille ou une plaque en un matériau à conductivité thermique fortement anisotrope.

8. Dispositif selon l'une des revendications 1 à 7, dans lequel la couche (23) à conductivité thermique fortement anisotrope est une feuille de graphite ou une plaque de graphite à structure multicouche.

9. Dispositif selon l'une des revendications 1 à 8, dans lequel la couche (23) à conductivité thermique fortement anisotrope s'étend sur toute la section transversale du support (2), sur toute la surface de la paroi du récipient (1) ou sur toute la surface de la table de travail (4).

10. Dispositif selon l'une des revendications 1 à 8, dans lequel la couche (23) à conductivité thermique fortement anisotrope s'étend uniquement sur une partie de la section transversale du support (2), de la surface de la paroi du récipient (1) ou de la surface de la table de travail (4).

11. Dispositif selon l'une des revendications 1 à 10, dans lequel la couche (23) à conductivité thermique fortement anisotrope fait partie du support (2), de la paroi du récipient (1) ou de la table de travail (4).

12. Dispositif selon l'une des revendications 1 à 11, dans lequel la couche (23) à conductivité thermique fortement anisotrope est une plaque posée sur le support (2) et sur laquelle l'objet (3) doit être construit.
